# EUROPEAN PATENT APPLICATION

(11) **EP 1 538 807 A1**
(43) Date of publication of application: **08.06.2005**
(21) Application number: 04257547.2
(22) Date of filing: 03.12.2004
(51) Int. Cl.: H04L 29/06, A63F 13/00

(54) **A network application system**

(30) Priority: 04.12.2003 US 726570
(71) Applicant: Kabushiki Kaisha G-mode, Tokyo (JP)
(72) Inventor: Miyaji, Takeshi, Classa Hatsudai 802, Tokyo (JP)
(74) Representative: Butler, Michael John

(57) **Abstract**

A network application system according to the present invention has a network server 1, a single communication device 2 with the wide-area communications function and local-area communications function, a plurality of communication devices 3 to 5 each with the local-area communications function, and a common application that is distributed to each of communication devices, and constructs a network environment where in the application operating on the single communication device, a module portion associated with the wide-area communications connects with the network server via a wide-area communications network, while a module portion associated with the local-area communications connects with the plurality of communication devices via a local-area communications network. The system is capable of saving the communication time and communication cost, coping with network applications requiring the real-time response and high-speed response, thereby overcoming the complaint such that a person with low skill is not ranked, and thus maintaining the product life of the network applications.

## Description

The present invention relates to a large-scale network application system that mutually connects a network application using wide-area communications and another network application using local-area communications.

Currently, there are various kinds of network application systems for a single client to execute the content and data compilation with a network server using wide-area communications such as Internet communication networks and carrier communication networks. Further, with the widespread use of JAVA applet, compact communication devices such as cellular telephones have been capable of providing various kinds of content. As a result, particularly in the genre of game, using a client-server application, games are developed and provided such as a role-playing game and cultivation game that enable results to be stored in a server and network-playing game where a client performs real-time communications with another client to play the game.

However, such a network-playing game has defects such that the cost is increased because it is required to always connect with the network server, and that since a client participates only alone, the rank is determined according to the skill of the client, the client loses the desire to participate because it is hard to increase the rank, and therefore the product life of the network game is reduced whose essential object is playing with another client.

Further, although a client performs real-time communications via the network server, in the network application system using wide-area communications, the communication rate is low, and a data communication amount per unit time is small to share with the application operating in the network application system. Therefore, the system is capable of coping with network applications such as a card game where ranks are determined between playing clients and low proceeding speed is allowed. However, the system is not capable of coping with network applications such as car race and soccer games which require fast and real-time display on communication devices of playing clients and therefore require a large data communication amount per unit time.

In view of the foregoing, it is an object of the present invention to provide a network application system capable of reducing the communication time and communication cost, and of applying to a network application that requires a real-time response and high-speed response.

It is another object of the present invention to overcome the complaint apt to occur in a network game such that a person with low skill is not ranked and thereby to maintain the product life of a network application.

In order to achieve the aforementioned objects, the present invention adopts aspects as described below.

A first aspect provides a network application system with incorporated wide-area communications and local-area communications which has a network server that stores and processes transmitted data, a single communication device with the wide-area communications function and local-area communications function, a plurality of communication devices each with the local-area communications function, and a common application that is distributed to each of communication devices including the single communication device and the plurality of communication devices, and constructs such a network environment that in the application operating on the single communication device, a module portion associated with the wide-area communications connects with the network server via a wide-area communications network, while a module portion associated with the local-area communications connects with the plurality of communication devices via a local-area communications network, in which the single communication device transmits a result obtained by executing the application among the communication devices via the local-area communications network to the network server via the wide-area communications network.

It is thus possible to adequately cope with a network application which needs a large data transmission amount per unit time in operating in the network application system and therefore requires the real-time response and the high-speed response. It is further possible to cause a person with low skill to keep interest in the network application.

According to a second aspect, in the network application system with incorporated wide-area communications and local-area communications, a plurality of groups exists, where each of the group has the single communication device and the plurality of communication devices.

It is thereby possible to enlarge the scale of the network application system without restraint.

A third aspect provides a method of managing a network application system with incorporated wide-area communications and local-area communications which constructs a network environment where in an application operating on a single communication device, a module portion associated with the wide-area communications connects with a network server via a wide-area communications network, while a module portion associated with the local-area communications connects with a plurality of communication devices via a local-area communications network, and has in the network environment the steps of executing the application among communication devices including the single communication device and the plurality of communication devices via the local-area communications network, and of transmitting a result obtained by the executing to the network server via the wide-area communications network from the single communication device.

It is thus possible to adequately cope with a network application which needs a large data transmission amount per unit time in operating in the network application system and therefore requires the real-time response and the high-speed response, and to save the communication time and communication cost. It is further possible to cause a person with low skill to keep interest in the network application.

A fourth aspect provides the method in the third aspect with the steps of transmitting processed data obtained by processing the result to the single communication device via the wide-area communications network from the network server having received transmission of the result, and of transmitting the processed data to the plurality of communication devices via the local-area communications network from the single communication device having received the processed data.

It is thereby possible to save the communication cost and to cause a person with low skill to keep interest in the network application.

A fifth aspect provides the method in the third aspect or the fourth aspect with the steps of transmitting the application to the single communication device via the wide-area communications network from the network server, and of transmitting the application to the plurality of communication devices via the local-area communications network from the single communication device having received transmission of the application.

It is thus possible to save the communication time and communication cost of clients that have the communication devices.

According to a sixth aspect, in the method in any one of the third to fifth aspects, a plurality of groups exists, where each of the groups has the single communication device and the plurality of communication devices, and each of the plurality of groups has each of the steps as described above.

It is thereby possible to enlarge the scale of the network application system without restraint, and to greatly reduce the communication time and communication cost imposed on clients.

In the present invention, in the network application, the module portion that has a small data communication amount and does not require the real-time response and high-speed response performs data transmission/reception using wide-area communications, while the module portion that has a large data communication amount and requires the real-time response and high-speed response performs data transmission/reception using local-area communications, thereby enabling construction and provision of a large-scale system capable of coping with any network applications.

Further, as described above, the network application system using wide-area communications and the network application system using local-area communications are mutually connected to be switched corresponding to the data communication amount, and it is thereby possible to greatly save the communication time and communication cost.

Furthermore, the network server processes results obtained by executing the application among communication devices to compile, and calculates an average of a group including a plurality of communication devices in addition to a result of each of the communication devices, and it is thereby possible for a client with low skill to share the pleasure of participating in the network-playing game.

As a result of sharing the pleasure of participating in the network-playing game, each client is capable of keeping interest in the network application, and thus, the application is capable of maintaining its product life.

An embodiment of the present invention will be described specifically below with reference to the accompanying drawings, in which:
Fig. 1 is a view illustrating a configuration of a network application system according to a preferred embodiment of the present invention;
FIG.2 is a schematic view illustrating scenery displayed on a monitor of a communication device when the network application is a game application of car race;
FIG.3 is a schematic view illustrating the flow of distribution of scenery data according to the game application distributed from the network server; and
FIG.4 is a flowchart illustrating a method of managing the network application system according to a preferred embodiment of the present invention,

In the figures, "1" denotes a network server, "2" denotes a single communication device, "3" to "5" denote a plurality of communication devices, "6" denotes a first group, "7" denotes another single communication device, "8" and "9" denote another plurality of communication devices, "10" denotes a second group, "11" denotes a wide-area communications network, "12" denotes a local-area communications network, "13" denotes a storage, "14" denotes a race compiled result of the first group, "15" denotes a race compiled result of the second group, "16" denotes scenery data indicative of a race status, "17" denotes a car image of an operator, "18" to "20" denote car images of a plurality of participants, and "21" denotes the distributed scenery data.

The present invention relates to a system and method of managing the system for executing network applications, more particularly, client-server applications, is applicable to applications in various genres such as business and game, and particularly, is suitable for use in an application requiring the real-time response and high-speed response. Therefore, this embodiment describes a case where the present invention is applied to a game application of car race. In addition, a network environment is constructed where the application (described later) operating on the communication device 2 connects in a module portion associated with wide-area communications to the network server 1 via the wide-area communications network 11, while connecting in a module portion associated with local-area communications to the plurality of communication devices 3 to 5 via the local-area communications network 12.

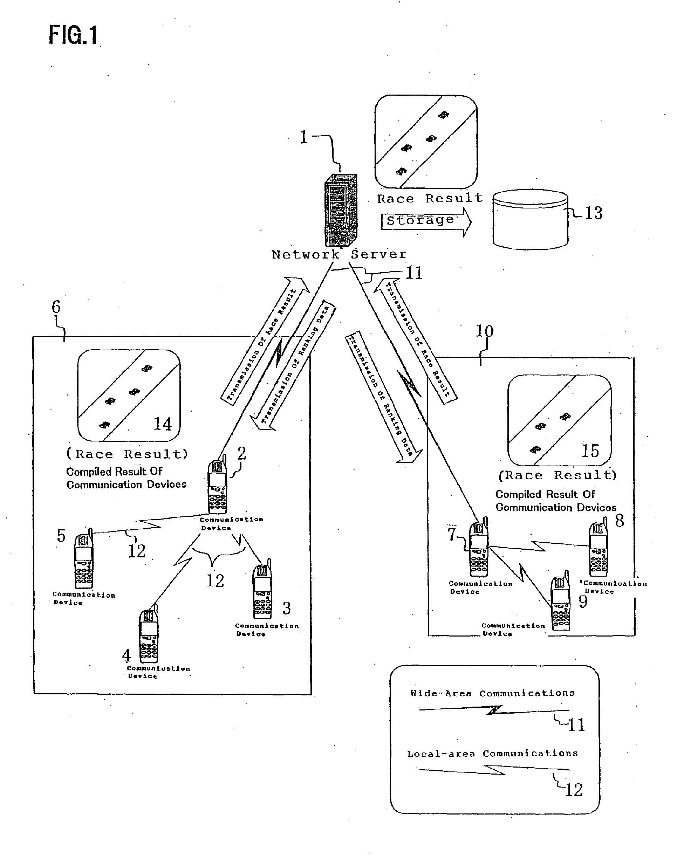

In FIG.1, the network server 1 manages the wide-area communications, and has functions of storing data received from the communication devices and data to transmit to the communication devices, while performing calculation processing such as ranking data generation based on results of the race transmitted from the communication devices. The network server 1 has the storage 13 that stores the various data as described above, and connects to the communication device 2 via the wide-area communications network 11 as described later.

The single communication device 2 is indicated as a cellular telephone in the figures, and may be a portable information terminal such as PDA (Personal Data Assistant) or a personal computer. The communication device 2 has a wide-area communications interface (not shown) to connect to the wide-area communications network 11, and a local-area communications interface (not shown) to connect to the local-area communications network 12, and connects to the network server 1 via the wide-area communications network 11, while connecting to the plurality of communication devices 3 to 5 via the local-area communications network 12 as described later. In addition, types of wide-area communications and of local-area communications and kinds of communications interfaces are not limited particularly.

The plurality of communication devices 3 to 5 are also indicated as cellular telephones, while being not limited particularly in type. Each of the communication devices 3 to 5 has at least an interface to connect to the local-area communications network, while being allowed to have interfaces for both the wide-area communications and local-area communications, and connects to the single communication device 2 via the local-area communications network 12.

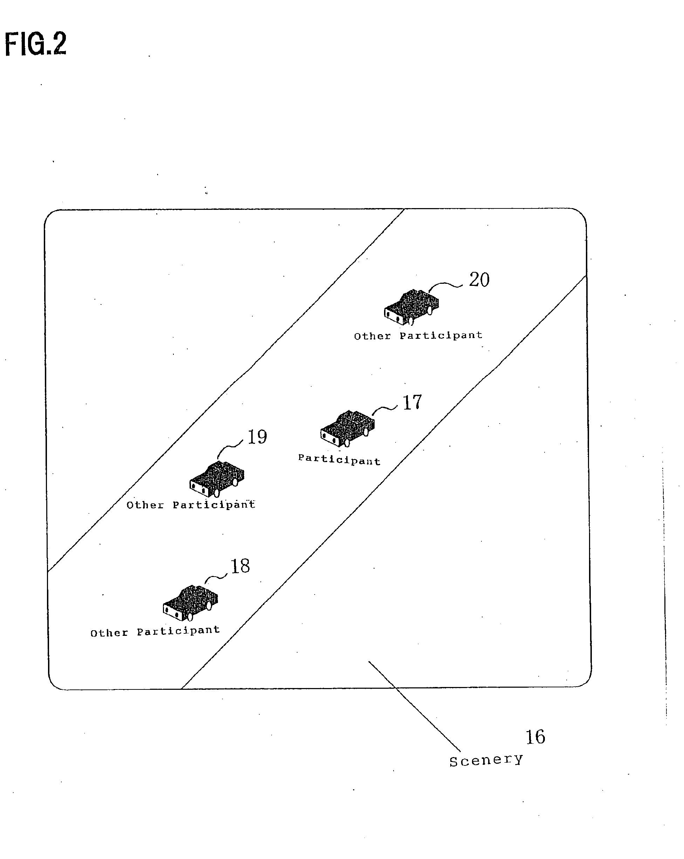

In addition, each of the communication device 2 and communication devices 3 to 5 has a preinstalled common application to mutually execute among communication devices including the communication device 2 and communication devices 3 to 5. Further, another application may be downloaded to the communication devices from the network server 1, another application server or content server (described later). In this embodiment, as shown in the figure, the application of car race is installed on each of the communication devices in advance or by downloading. When the application is executed, a screen enabling viewing of a status of the race is displayed on a monitor in a communication device of a client who participates in the race. FIG.2 shows an example of screen display when the application is of car race. On the scenery 16, the car 17 of the operator and cars 18 to 20 of the other participants are display, and move at real time by execution of the race.

In this embodiment, a set of communication devices such as the communication device 2 and communication devices 3 to 5 is grouped, and a plurality of such groups is provided, whereby it is possible to enlarge the scale of the network application system without restraint and further increase the amusement of the competition network game. The first group 6 is comprised of the communication device 2 and communication devices 3 to 5, and the second group 10 is comprised of the communication device 7 and communication devices 8 and 9. By providing a large number of such groups, the scale of the network application system enlarges without restraint, enabling a client to compete with participants over the world, for example.

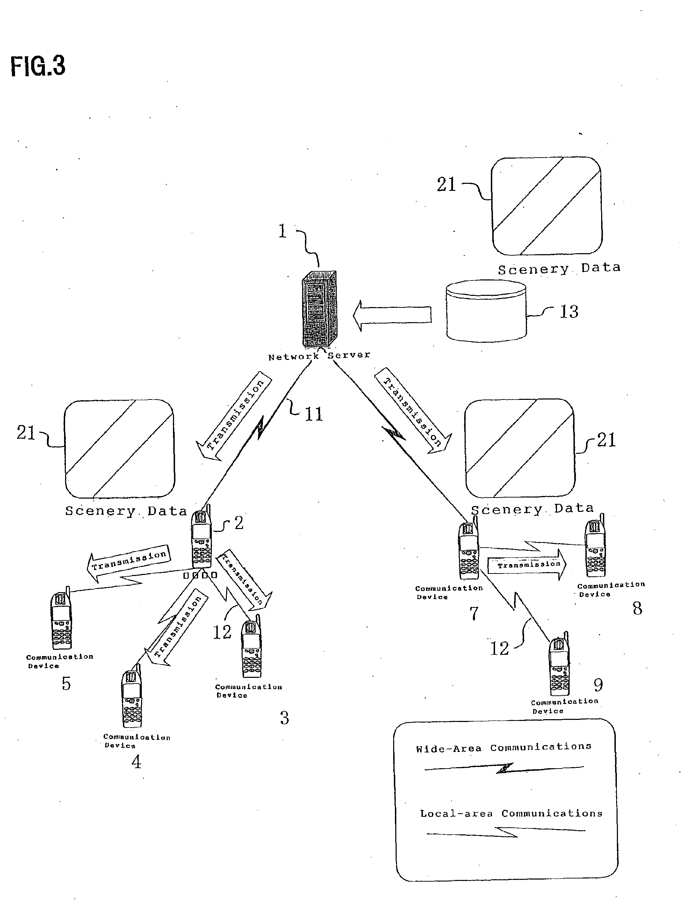

In FIG.3, the scenery data 21 is read from the storage 13, transmitted to the communication device 2 from the network server 1 via the wide-area communications network 11, and further transmitted to the communication devices 3 to 5 from the communication device 2 via the local-area communications network 12. Similarly, the scenery data 21 is transmitted to the communication device 7 from the network server 1 via the wide-area communications network 11, and further transmitted to the communication devices 8 and 9 from the communication device 7 via the local-area communications network 12. The scenery data 21 may be the application or content distributed to communication devices each with a preinstalled common application.

The method of managing the network application system according to a preferred embodiment of the present invention will be described below with reference to Figs 1 to 4. In addition, a case is assumed herein of using an application of a car race.

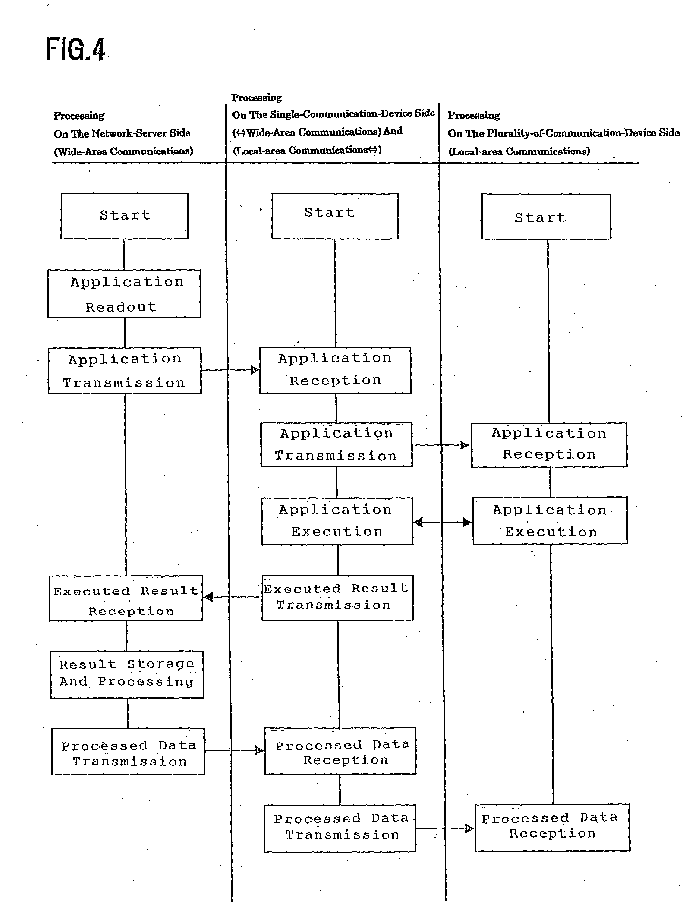

In FIG.3, the power supply is "ON" in each of the network server 1, single communication devices 2 and 7, and pluralities of communication devices 3 to 5, and 8 and 9 which are waiting for a start of a competition game whose content is the car race. This state corresponds in FIG.4 to a stage of "start" in the processing on the network-server side and on the communication-device side. Although it is not necessary that all power supplies are "ON" at the same timing in the network server 1 , single communication devices 2 and 7, and pluralities of communication devices 3 to 5 and 8 and 9, it is required to all the power supplies are "ON" in a stage where the application is transmitted (described below).

When a common application is not preinstalled on each communication device, the communication devices 2 and 7 transmit a download request for an application manually or automatically to the network server 1, and the network server 1 reads the desired car-race application from the storage 13. This state corresponds in FIG.4 to a stage of "application readout" in the processing on the network-server side. In addition, in this embodiment, the network server 1 has the function of an application server or content server; it may be possible to download an application from an application server or content server other than the network server 1.

The network server 1 transmits the application read from the storage 13 to the single communication devices 2 and 7 via the wide-area communications network 11 such as the internet and a carrier network run by a communication carrier. This state corresponds in FIG.4 to a stage of "application transmission" in the processing on the network-server side. In addition, in this embodiment, the application is transmitted to both the single communication devices 2 and 7; it may be possible to transmit the application to either the single communication device 2 or 7 or another single communication device. Further, when a common application is preinstalled on each communication device, it may be possible to transmit content allowing the processing in the application.

Each of the single communication devices 2 and 7 receives the application from the network server 1, and store the application in a provided storage, while transmitting the application to the plurality of communication devices 3 to 5 or 8 and 9, respectively, via the local-area communications network 12 using Ir signals or radio signals such as IrDA or Bluetooth respectively. This state corresponds in FIG.4 to a stage of "application reception" and "application transmission" in the processing on the single-communication-device side. In this way, network application systems of wide-area communications and local-area communications are incorporated. In addition, types of wide-area communications and local-area communications are not limited as described above, and further not limited in wireless or wired communications.

The communication devices 3 to 5 and 8 and 9 receive the application to store in respective storages, and thus, the common application is distributed to all the communication devices. This state corresponds in FIG. 4 to a stage of "application reception" in the processing on the plurality-of-communication-device side. In this embodiment, since the distributed application is composed of scenery to play the game and a plurality of cars corresponding to participants, the scenery 21 with no participants displayed is recognized as a distributed state as shown in FIG.3 before the application is executed.

When the common application is thus distributed to all the communication devices, the car race is started by executing the application. This state corresponds in FIG.4 to a stage of "application execution" in the processing on the single-communication-device side and on the plurality-of-communication-device side. When each communication device starts up the application, competition of the car race can be performed in a set of communication devices connected via the local-area communications network, for example, in communication devices 2 to 5 in the group 6 or communication devices 7 to 9 in the group 10 in FIG.1. In this embodiment, since the game is to compete for the shortest time taken to move from a start position to a finish position of the race on the scenery, as shown in FIG.2, the screen displays the car image 17 representing the operator of the communication device and car images of 18 to 20 representing the other participants in the same group on the scenery 16, and thus displays a status of car moving position at real time.

Generally, local-area communications have a larger data amount per unit time communicated between communication devices than that in wide-area communications, further have a faster communication rate , thereby provide no delay time, and thus are high in reliability of communication quality. It has been desired to play in local-area communications a game whose content is competition requiring the real-time response and high-speed response such as a car race and sport. Conventionally, however, only network application systems exist where competition games are played in wide-area communications, and there is no system that incorporates the network application system using wide-area communications and a network application system using local-area communications. The present invention enables mutual connections between wide-area and local-area communications, and thereby is capable of providing games with real-time and high-speed responses that are not achieved in the conventional wide-area communications network games.

When the application is executed and the race is finished, the communication device 2 transmits to the network server 1 via the wide-area communications network 11 the race compiled result 14 of the first group 6 that is a set of the communication device 2 and communication devices 3 to 5 connected via the local-area communications network 12, while the communication device 7 transmits to the network server 1 via the wide-area communications network 11 the race compiled result 15 of the second group 10 that is a set of the communication device 7 and communication devices 8 and 9 connected via the local-area communications network. This state corresponds in FIG.4 to a stage of "executed result transmission" in the processing on the single-communication-device side. In addition, each of communication devices participating in the game using the local-area communication network 12 is capable of confirming results of the race at any time on the monitor of the each device, as well as car moving positions of the operator and participants in the race. Examples of result of the race in this embodiment include ranking, record time, behavior data and score in the group 6 or 10.

The network server 1 receives race results corresponding to executed results of the application, stores the result data, while processing the data to generate ranking data, time data, etc, and further stores the processed data. This state corresponds in FIG.4 to a stage of ''result storage and processing" in the processing on the network-server side.

Currently performed network-playing games provide the content where a participant competes alone for the record time with the server, and is of network application system where the ranking is determined due to the skill of the participant alone. Therefore, a person with low skill is hard to rank, and as a result, gets bored with the game, resulting in a defect of reducing the product life. However, by constructing such a system of the present invention, average data including the other participants data is calculated as well as competition data of one participant alone, and the result of a group that is a set of communication devices is referred to, whereby a person with low skill increases the chance of being ranked, and improves the desire of participating in the game.

When the processed data is thus generated based on the race results, the network server 1 transmits the data to the single communication devices 2 and 7 via the wide-area communications network 11. The single communication devices 2 and 7 receive the processed data from the network server 1, and transmit the processed data to the communication devices 3 to 5 and 8 and 9 connected to the communication terminal 2 or 7 via the local-area communications network 12, respectively. This state corresponds in FIG.4 to a stage of "processed data reception" and "processed data transmission" in the processing on the single-communication-device side.

Thus, the plurality of communication devices 3 to 5 and 8 and 9 receive the processed data from the single communication devices 2 and 7 respectively, and each communication terminal is capable of checking the average data for each group as well as the ranking data and record time of each person. This state corresponds in FIG.4 to a stage of "processed data reception" in the processing on the plurality-of-communication terminal side.

As described above, the conventional client-server application system provides download of application for playing participants and/or compiled ranking data to all the communication devices separately from a network server always via a wide-area communications network, and therefore, has defects of increasing the communication time and communication cost. However, in the present invention, wide-area communications and local-area communications are incorporated, the single communication devices 2 and 7 first receive all the data distributed from the network server 1, and distribute the data to the plurality of communication devices 3 to 5 and 8 and 9, and it is thereby possible to greatly reduce the communication time and communication cost.

Thus, according to the network application system that incorporates wide-area communications and local-area and the method of managing the system according to the present invention, it is possible to greatly save the communication time and communication cost in download and information distribution. Further, since the average value of result data achieved by participants in a group is calculated as well as result data achieved by one participant, the possibility of being ranked increases irrespectively of the level of skill, and it is thereby possible to maintain interest in the application and to increase the product life. Moreover, since the competition is carried out using local-area communications with a large data amount per unit time, it is possible to provide network applications with the real-time response and high-speed response that are not available conventionally.

## Claims

1. A network application system with incorporated wide-area communications and local-area communications, the system comprising:
a network server that stores and processes transmitted data;
a single communication device with a wide-area communications function and a local-area communications function;
a plurality of communication devices each with the local-area communications function; and
a common application that is distributed to each of communication devices including the single communication device and the plurality of communication devices,
wherein such a network environment is provided that in the application operating on the single communication device, a module portion associated with the wide-area communications connects with the network server via a wide-area communications network, while a module portion associated with the local-area communications connects with the plurality of communication devices via a local-area communications network, in which the single communication device transmits a result obtained by executing the application among the communication devices via the local-area communications network to the network server via the wide-area communications network.

2. The network application system according to claim 1, wherein a plurality of groups exists, each of the groups having the single communication device and the plurality of communication devices.

3. A method of managing a network application system with incorporated wide-area communications and local-area communications that provides a network environment where in an application operating on a single communication device, a module portion associated with the wide-area communications connects with a network server via a wide-area communications network, while a module portion associated with the local-area communications connects with a plurality of communication devices via a local-area communications network, the method comprising in the network environment the steps of:
executing the application among communication devices including the single communication device and the plurality of communication devices via the local-area communications network; and
transmitting a result obtained by the executing to the network server via the wide-area communications network from the single communication device.

4. The method according to claim 3, further comprising the steps of:
transmitting processed data obtained by processing the result to the single communication device via the wide-area communications network from the network server having received transmission of the result; and
transmitting the processed data to the plurality of communication devices via the local-area communications network from the single communication device having received the processed data.

5. The method according to claim 3 or 4, further comprising the steps of:
transmitting the application to the single communication device via the wide-area communications network from the network server; and
transmitting the application to the plurality of communication devices via the local-area communications network from the single communication device having received transmission of the application.

6. The method according to any one of claims 3 to 5, wherein a plurality of groups exists, each of the groups has the single communication device and the plurality of communication devices, and the method steps are carried out for each of the plurality of groups.
